# EUROPEAN PATENT SPECIFICATION

(11) **EP 3 961 651 B1**
(45) Date of publication and mention of the grant of the patent: **02.10.2024**
(21) Application number: 20794480.2
(22) Date of filing: 02.04.2020
(51) Int. Cl.: G21C 3/62, C01B 33/26

(54) **NUCLEAR FUEL PELLETS AND MANUFACTURING METHOD THEREOF**
KERNBRENNSTOFFPELLETS UND VERFAHREN ZU IHRER HERSTELLUNG
PASTILLES DE COMBUSTIBLE NUCLÉAIRE ET LEUR PROCÉDÉ DE FABRICATION

(30) Priority: 23.04.2019 KR 20190047415
(43) Date of publication of application: 02.03.2022
(73) Proprietor: Korea Atomic Energy Research Institute, Daejeon 34057 (KR)
(72) Inventor: JEON, Sang Chae, Sejong 30130 (KR); KIM, Keon Sik, Daejeon 34022 (KR); KIM, Jong Hun, Daejeon 34089 (KR); KIM, Dong Joo, Daejeon 34023 (KR); KIM, Dong Seok, Daejeon 34020 (KR); YOON, Ji Hae, Daejeon 34219 (KR); YANG, Jae Ho, Sejong 30130 (KR)
(74) Representative: Regimbeau
(86) International application number: PCT/KR2020/004522
(87) International publication number: WO 2020/218751

(56) References cited:
- JP-B2- S 642 671
- KR-A- 20100 054 054
- KR-A- 20170 101 083
- US-A- 5 180 527
- US-A- 5 180 527
- US-B2- 6 808 656
- WEILIN JIANG ET AL: "Microstructure and Cs Behavior of Ba-Doped Aluminosilicate Pollucite Irradiated with F + Ions", THE JOURNAL OF PHYSICAL CHEMISTRY C, vol. 118, no. 31, 23 July 2014 (2014-07-23), US, pages 18160 - 18169, XP055752858, ISSN: 1932-7447, DOI: 10.1021/jp5045223
- JIANG, WEILIN ET AL.: "Microstnicture and Cs Behavior of Ba-Doped Aluminosilicate Pollucite Irradiated with F+ Ions", JOURNAL OF PHYSICAL CHEMISTRY C, vol. 118, no. 31, 24 June 2014 (2014-06-24), pages 18160 - 18169, XP055752858, DOI: 10.1021/jp5045223

## Description

### [Technical Field]

The present invention relates to nuclear fuel pellets and a manufacturing method thereof, and more particularly, to nuclear fuel pellets comprising a trapping material of fission gas and a manufacturing method thereof.

### [Background Art]

Starting from the Fukushima nuclear disaster, accident tollerant fuel (ATF) for improving the stability of nuclear fuel has been actively developed. As part thereof, the development of fission gas release (FGR) improved pellets has been conducted to reduce fission gas (FG) generated in nuclear fuel pellets during operation of a nuclear reactor from being released to the outside of the pellets. Cesium (Cs) and iodine (I) are main fission gases that threaten the safety problem of the nuclear fuel in terms of the generation amount and toxicity thereof due to a high radioactivity level and high absorption in the human body because the cesium (Cs) and iodine (I) may be present as gases.

To this end, a Cs trapping material has been developed based on a SiO₂-based material, and recently, the development of trapping materials capable of stably trapping and storing Cs even in an accident situation according to an ATF development purpose has been conducted.

Meanwhile, in a nuclear fuel rod for a nuclear power plant, many nuclear fuel pellets are laminated in a cladding tube, and as a nuclear reaction is performed in a nuclear reactor, the nuclear fuel pellets are volume-expanded to reduce a distance between the nuclear fuel pellets and the cladding tube, and as a result, the nuclear fuel pellets are in contact with each other to give stress to the cladding tube. In addition, gas with strong corrosion is generated due to a nuclear reaction product to increase an internal pressure, and as a result, stress corrosion cracking (SCC) occurs due to physical and chemical interactions between the nuclear fuel pellets and the cladding tube. The iodine (I) of the fission gases has a small generation amount as compared with Cs, but is one of gases that cause SCC to the cladding tube, but the development of a trapping material to I is very slight.

Weilin Jiang et al, in "Microstructure and Cs Behavior of Ba-Doped Aluminosilicate Pollucite Irradiated with F+ Ions", the journal of physical chemistry c, vol. 118, no. 31, 18160-18169 US, 23 July 2014, disclose the use of aluminosilicate pollucite as a model waste form.

In other fields, many studies for trapping for I have been conducted, but these processes mainly have wet processes such as Mercurex and Iodox, and as a result, it is difficult to be applied to the field consisting of a series of dry processes. In addition, through the same hot sintering process as when manufacturing the nuclear fuel pellets, there is a problem that a trapping material developed in the related art also losses a trapping function for I, and there is almost no case of developping a trapping material capable of a selective trapping ability for I as fission gas.

In the conventional Cs trapping material, there is proposed a technique of trapping I in the form of CsI as a trapping product using a trapping material pre-trapped with Cs, but in the corresponding technique, first, since I is trapped as the trapping product in the form of CsI, in order to trap I, since there is required a prerequisite that the Cs needs to be pre-trapped, there is a problem that a trapping probability of I itself is lowered. That is, when Cs and I are diffused independently in base particles, respectively, there is a problem that I cannot be trapped with a trapping material itself which is not trapped with Cs. In addition, since CsI as the trapping product is not excellent in stability at a high temperature due to a melting point of about 621°C, the trapping using the above composition is not useful even in that I can be trapped only in a very partial area with a low temperature in the nuclear fuel pellets. In addition, a conventional trapping material itself trapped with Cs may be stably preserved in a grid up to a high temperature to stably preserve Cs up to a high temperature. However, when I is trapped using the trapping material trapped with Cs, Cs which has been trappped in the trapping material reacts with I to form a CsI phase and volatilized to gas at a lower temperature, and rather, there is a problem that the CsI phase adversely affects Cs trapping.

Accordingly, even while the trapping ability for fission gas such as Cs and I is excellent, the demand on the development of nuclear fuel pellets having a independent trapping ability for each of Cs and I and a manufacturing method thereof has continued.

### [Disclosure]

### [Technical Problem]

An object of the present invention is to provide nuclear fuel pellets with improved FGR for preventing the volatilization of fission gas and facilitating the removal of fission gas by trapping fission gas, and a manufacturing method thereof.

Specifically, an object of the present invention is to provide nuclear fuel pellets having an independent trapping ability for each of Cs and I with excellent trapping abilities for Cs and I as fission gases, and a manufacturing method thereof.

### [Technical Solution]

In order to acheive the object, the present invention provides a nuclear fuel pellet comprising a nuclear fuel; and a trapping material of fission gas, wherein the trapping material of the fission gas includes an oxide containing an oxide of silicon (Si), aluminum (Al) and barium (Ba) as defined in claim 1.

In addition, the present invention provides a manufacturing method of a nuclear fuel pellet comprising mixing and then sintering a nuclear fuel raw material; and at least one oxide selected from the group consisting of a silicon oxide, an aluminum oxide, and a barium oxide.

### [Advantageous Effects]

The nuclear fuel pellets of the present invention may exhibit an excellent trapping effect on fission gases. Specifically, the nuclear fuel pellet of the present invention may selectively trap and separate Cs and/or I of fission gases, and more particularly, may exhibit an independent trapping ability for Cs and I. Accordingly, as compared with a conventional I trapping technique in which Cs trapping is a prerequisite, I may be trapped independently of the Cs trapping to improve the trapping efficiency of I. In addition, since an interference effect by I is reduced, the Cs trapping efficiency may also be improved, and since the Cs trapping product is preserved at a higher temperature, the volatilization rate of Cs and I may be significantly reduced.

In addition, when the nuclear fuel pellets of the present invention are used, Cs and/or I as fission gas is selectively trapped in the pellets, and thus, there is an advantage of alleviating the rise of a rod internal pressure during a normal operation and lowering the SCC occurrence rate of the cladding tube. Accordingly, even while the nuclear fuel is exposed due to a nuclear accident, it is possible to prevent or delay FG from being emitted to an environment within a trapping temperature range.

In addition, by using the manufacturing method of the nuclear fuel pellets of the present invention, it is possible to manufacture nuclear fuel pellets having an excellent trapping effect for fission gases, specifically, a selective trapping ability for Cs and/or I of fission gases and an excellent trapping ability independently of each of the Cs and/or I.

### [Description of Drawings]

The accompanying drawings of this specification exemplify a preferred embodiment of the present invention, the spirit of the present invention will be more clearly understood from the following detailed description taken in conjunction with the accompanying drawings, and thus it will be understood that the present invention is not limited to only contents illustrated in the accompanying drawings.

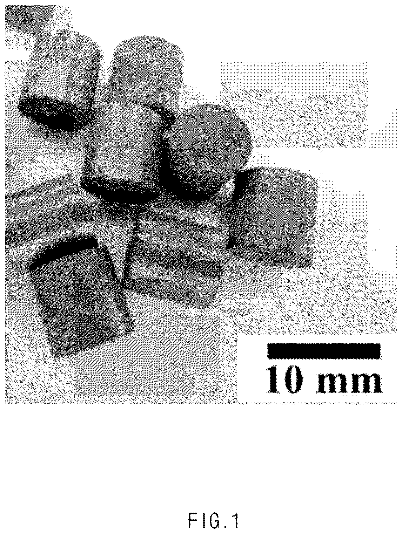

FIG. 1 illustrates a photograph of UO₂ nuclear fuel pellets according to an embodiment.

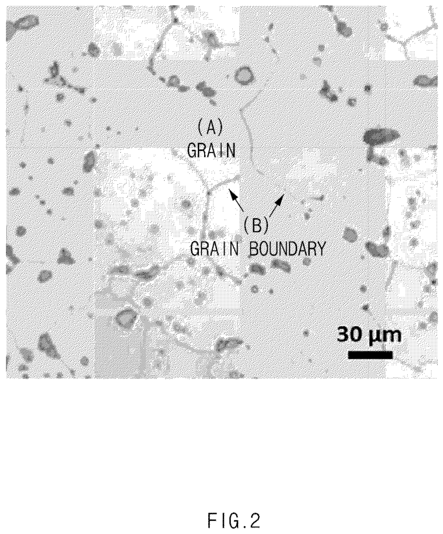

FIG. 2 illustrates a result of confirming a microstructure of a UO₂ nuclear fuel pellet according to an embodiment through an optical microscope. In FIG. 2, a planar structure illustrates a pellet grain and a boundary structure between the surfaces illustrates a grain boundary. According to FIG. 2, a typical grain and a grain boundary structure of the nuclear fuel pellet are illustrated, and a separate secondary phase except for pores is not observed in the grain, and thus, it is estimated that a trapping material containing added oxides containing Ba, Al and Si is distributed in the grain boundary.
FIG. 3 illustrates an equilibrium diagram of a trapping material composition formed by using Al₂O₃, SiO₂, and BaO at a mixed weight ratio of 1:1:1 as starting materials using a HSC chemistry according to an embodiment. The equilibrium diagram illustrates Al₂O₃*SiO₂(D), BaO*Al₂O₃, Ba₂SiO₄, BaSiOs, BaAl₂Si₂O₈, Al₂O₃, BaSi₂O₅, SiO₂, and Ba₂Si₃O₈, respectively.
FIGS. 4A and 4B illustrate potentials (FIG. 4A: Cs potential, FIG. 4B: I potential) of trapping products formed by a trapping material composition according to an embodiment. At this time, in order to simulate a furnace environment, an
O₂ potential is applied as - 450 kJ/mol. Equilibrium states representing each potential are as follows.
A1: BaO*Al₂O₃ + 2Cs (g) + 2SiO₂ + 1/2 O₂(g) = 2CsAlSiO₄ + BaO
A2: BaAl₂O₄ + 2Cs(g) + 2SiO₂ + 1/2 O₂(g) = 2CsAlSiO₄ + BaO
A3: Al₂O₃* SiO₂ + 2Cs(g) + SiO₂ + 1/2 O₂(g) = 2CsAlSiO₄
A4: BaSiOs + 2Cs(g) + 1/2 O₂(g) = Cs₂O*SiO₂ + BaO
A5: Al₂O₃ + 2Cs(g) + 2SiO₂ + 1/2 O₂(g) = 2CsAlSiO₄
B1: BaO*Al₂O₃ + I₂(g) = BaI₂ + Al₂O₃ + 1/2 O₂(g)
B2: BaAl₂O₄ + 2I₂(g) = BaI₂ + Al₂O₃ + 1/2 O₂(g)
B3: BaSiO₃ + I₂(g) = BaI₂ + SiO₂ + 1/2 O₂(g)
B4: BaAl₂SiO₈ + I₂(g) = BaI₂ + Al₂O₃ + 2SiO₂ + 1/2 O₂(g)

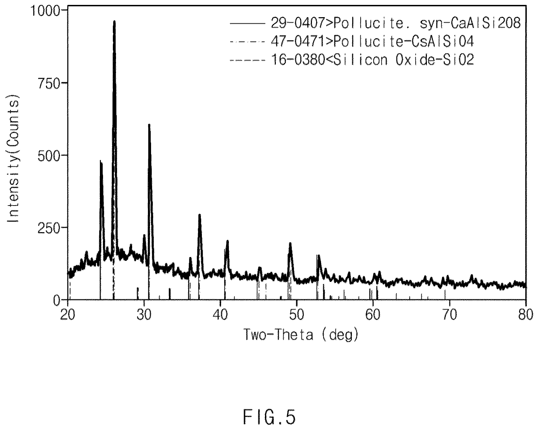

FIG. 5 illustrates an XRD analysis result after reaction heat-treatment of a Cs source of a trapping material including an oxide containing Ba, Al and Si according to an embodiment.

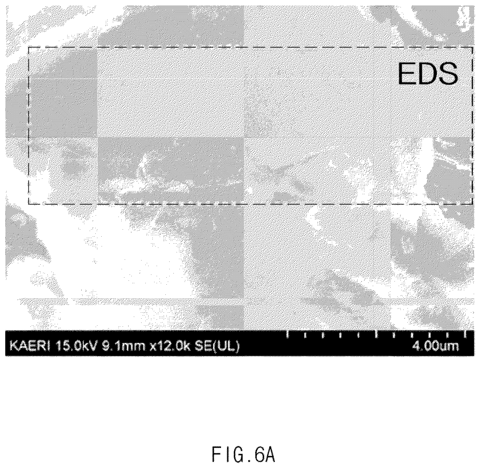

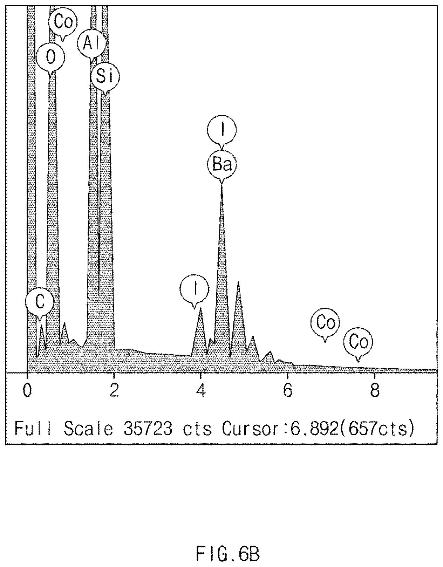

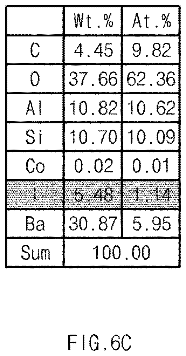

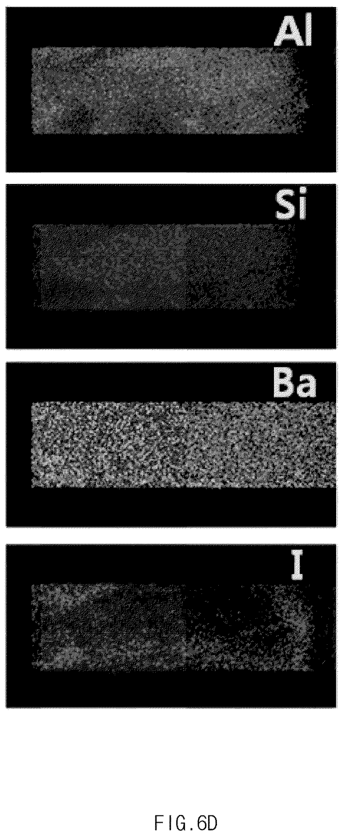

FIGS. 6A, 6B, 6C, and 6D illustrate SEM (6A) and EDS (6B, 6C, and 6D) analysis results after reaction heat-treatment of an I source of a trapping material including an oxide containing Ba, Al and Si according to an embodiment. A sample range for EDS analysis was marked by a square-dotted box on the SEM result of FIG. 6A.

### [Best Mode]

A nuclear fuel pellet of the present invention comprises a nuclear fuel; and a trapping material of fission gas, wherein the trapping material of the fission gas includes an oxide containing at least one element selected from the group consisting of silicon (Si), aluminum (Al) and barium (Ba).

The nuclear fuel may be an uranium-based oxide, and for example, may be uranium dioxide (UO₂), triuranium octoxide (U₃O₈), or a mixture thereof. More specifically, the nuclear fuel may be UO₂.

The trapping material of the fission gas comprises an oxide containing at least one element selected from the group consisting of silicon (Si), aluminum (Al), and barium (Ba). In an embodiment, the trapping material of the fission gas may be formed by sintering at least one oxide selected from the group consisting of a silicon oxide, an aluminum oxide, and a barium oxide, and specifically, the trapping material of the fission gas may include an oxide containing silicon, aluminum, and barium. The trapping material of the fission gas includes an oxide containing at least one element selected from the group consisting of silicon, aluminum, and barium, specifically an oxide containing silicon, aluminum, and barium to exhibit a trapping ability independently with respect to each of cesium and iodine.

The nuclear fuel pellet according to the present invention includes barium in the trapping material composition to exhibit an excellent trapping ability for I, as compared with a conventional trapping material of an oxide composition (Al-Si-O composition) containing silicon and aluminum having a trapping ability for Cs.

The trapping material of the fission gas is not limited thereto, but may be included in a grain boundary of the nuclear fuel pellet. As illustrated in FIG. 2, it was confirmed that the trapping material of the fission gas is distributed in a grain boundary through an optical micrograph of the nuclear fuel pellet of the present invention. Specifically, in the optical micrograph of the nuclear fuel pellet, it is observed that some pores are formed in a grain and in an area other than the grain boundary, traces of forming a secondary phase are not found.

In addition, in an aspect, the amount of the trapping material of the fission gas in the nuclear fuel pellet may be 0.05 to 1 wt%, for example, 0.1 to 0.5 wt% with respect to the weight of the nuclear fuel, but is not limited thereto.

In an aspect, it was confirmed that the amount of the trapping material of the fission gas estimated by measuring the amount of the fission gas trapped using the nuclear fuel pellet was 0.15 wt% with respect to the total weight of the nuclear fuel (ex. UO₂).

The fission gas may include at least one selected from the group consisting of cesium (Cs) and iodine (I) and specifically, may include at least one selected from the group consisting of cesium and iodine. More specifically, the nuclear fuel pellet according to the present invention may exhibit an independent trapping ability for cesium and iodine while the trapping ability for each of cesium and iodine is selectively excellent. In addition, the trapping product is not limited thereto, but for example, CsAlSiO₄, CsAlSi₂O₆ and BaI₂ of the trapping products may exhibit a high trapping rate for Cs and I in a wider area in the nuclear fuel due to relatively high melting points.

As described above, the trapping material of the fission gas comprises an oxide as set out in claim 1.

The oxide includes a compound represented by the following Formula 2 to exhibit an excellent trapping ability independently for each of Cs and I.

[Formula 2] BaₗAlₘSiₙOₚ (wherein, 0 < 1 ≤ 2, 0 < m ≤ 2, 0 < n ≤ 3 and 0 < p ≤ 8, and 2l + 3m + 4n = 2p.)

In an aspect, the trapping material of the fission gas may include an oxide in the form of BaAl₂Si₂O₈.

The nuclear fuel pellet includes the trapping material of the Ba-A1-Si-O composition as described above to exhibit an effect capable of independently trapping I as a trapping product in the form of BaI₂. Accordingly, as compared with a conventional I trapping technique using a Cs trapping product in the form of CsAlSiO₄, CsAlSi₂O₆, and the like, the nuclear fuel pellet may exhibit an excellent effect of preventing diffusion for Cs and I by stably trapping Cs without separating Cs from the trapping product.

The trapping material of the fission gas in the nuclear fuel pellet is not limited thereto, but for example, an average particle size (D₅₀) may be 0.1 to 100 µm, specifically 10 to 50 µm.

A manufacturing method of the nuclear fuel pellet of the present invention includes mixing and then sintering a nuclear fuel raw material; and at least one oxide as set out in claim 8.

The nuclear fuel raw material may be an uranium-based oxide, and specifically, may be a uranium oxide or a compound formed by mixing at least one selected from the group consisting of a plutonium oxide, a gadolinium oxide, and a thorium compound with the uranium oxide.

At least one oxide selected from the group consisting of a silicon oxide, an aluminum oxide, and a barium oxide which is mixed with the nuclear fuel raw material is a raw material for forming the trapping material of the fission gas. A mixed weight ratio of the nuclear fuel raw material and the oxide is not limited thereto, but for example, may be 0.05 to 1 wt% with respect to the total weight of the nuclear fuel raw material. As an example, the nuclear fuel pellet manufactured when the mixed weight ratio of the nuclear fuel raw material and the oxide is mixed in the range to manufacture the nuclear fuel pellet has an appropriate density range and may exhibit an excellent reactivity effect while exhibiting an excellent trapping ability for the fission gas. 0.05 wt% of a lower limit of the range is based on a minimum required amount calculated to trap Cs and I generated within the nuclear fuel, and 1 wt% of an upper limit is based on a maximum added amount (as the added amount is increased, the sintering density is reduced) capable of satisfying a sintering density (relative density of about 95%) reference as the nuclear fuel, respectively.

In the manufacturing method of the nuclear fuel pellet of the present invention, when the nuclear fuel raw material, the silicon oxide, the aluminum oxide, and the barium oxide all are mixed, the mixed weight ratio thereof is set so that there is a phase in which the generated trapping material spontaneously traps Cs and I, and is not particularly limited thereto.

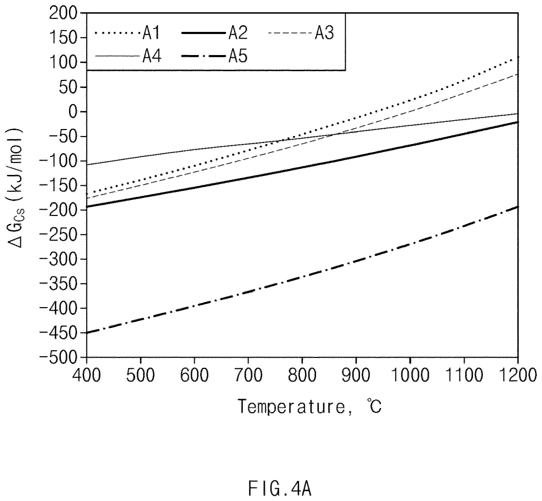

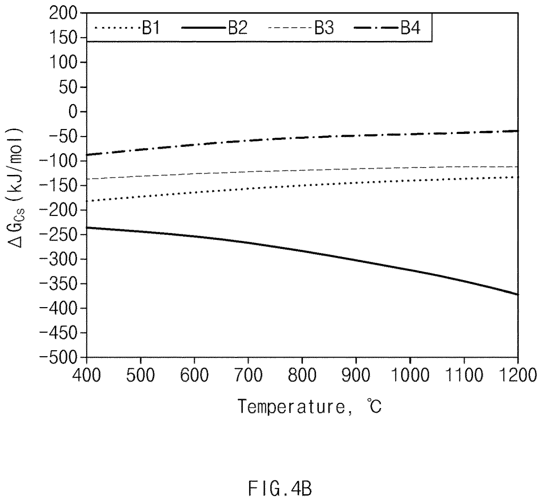

In an embodiment, as a result of manufacturing the nuclear fuel pellet using a mixture of the silicon oxide, the aluminum oxide, and the barium oxide at a weight ratio of 1:1:1, it was confirmed that the nuclear fuel pellet exhibits an excellent trapping ability for Cs and I (FIGS. 4A and 4B and FIGS. 6A to 6D).

In the step of mixing and then sintering the nuclear fuel raw material and the oxide, the sintering may be performed under a reducing gas atmosphere, and the reducing gas atmosphere may include hydrogen and inert gas atmospheres. The sintering atmosphere may be generally performed under a sintering condition of the manufacturing method of the nuclear fuel pellet and an additional optimization process is not required and it is economic.

In addition, the sintering may also be performed at a temperature which is higher than an eutectic temperature of the nuclear fuel raw material and the oxide for forming the trapping material of the fission gas and lower than a melting temperature of each of the nuclear fuel raw material and the oxide. The sintering is performed at a temperature higher than the eutectic temperature of the nuclear fuel raw material and the oxide to form grains and grain boundaries, preferably a trapping material of the fission gas in the grain boundaries, thereby improving a problem of reducing the trapping ability of the nuclear fuel pellet due to the volatilization of the trapping material. Accordingly, it is possible to improve the durability of the nuclear fuel pellet.

Hereinafter, the present invention will be described in detail with reference to Examples for understanding. However, Examples according to the present invention may be modified in various forms, and it is not interpreted that the scope of the present invention is limited to the following Examples. Examples of the present invention will be provided for more completely explaining the present invention to those skilled in the art.

### Manufacturing of nuclear fuel pellets and confirmation of microstructure

The manufacturing of nuclear fuel pellets was performed in order of preparation of starting powder, powder weighing, mixing, molding, and sintering. Al₂O₃, SiO₂ and BaO powders as the starting powder were weighed according to a weight ratio to be mixed with UO₂ powder. The mixing was performed for 30 minutes to 2 hours using a turbula mixer to secure uniformity. The mixed powder was introduced to a metal mold for molding to be pressed in a pellet form by applying pressure of 1 to 5 ton/cm² using a uniaxial molder. The molded pellets were introduced into a ceramic furnace and mounted in a heat-treatment furnace and then a reducing atmosphere was formed using hydrogen and carbon dioxide gases in a chamber and then isothermal sintering was performed for several times within about 1700°C. At this time, in order to minimize the heat shock of the sintering pellets, heating and cooling rates were within 5 °C/min.

The microstructure of the nuclear fuel pellet may be checked by an optical microscope, an SEM. The pellet was cut in an axial direction or radial direction using a diamond saw to expose the inner surface of the sintered pellet and then mount the corresponding surface to be exposed using a resin. When the curing of the resin was completed, the cutout surface of the sintered pellet was polished using a polisher. The polishing was performed in order from rough polishing that held a side surface to fine polishing using a diamond paste, and the surface was observed with an optical microscope after the polishing was finished (FIG. 2).

### Equilibrium composition analysis of trapping material

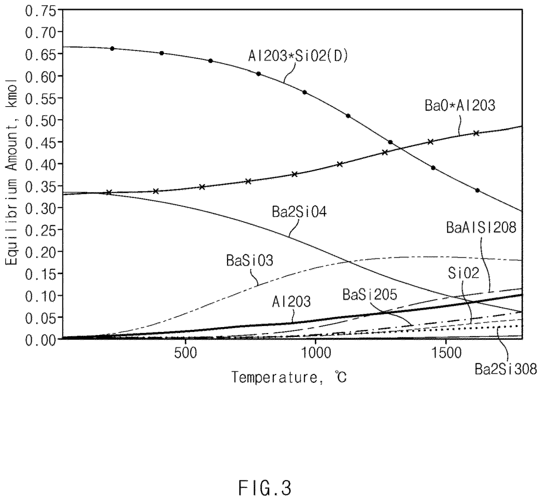

A result of predicting an equilibrium composition of a trapping material prepared by weighing Al₂O₃, SiO₂ and BaO powders at a weight ratio of 1:1:1 and using the powders as starting powders using HSC chemistry was illustrated in FIG. 3.

FIG. 3 is an equilibrium prediction diagram in a thermodynamic aspect on whether starting powders (Al₂O₃, SiO₂, BaO) of the trapping material are formed with any shape of compound (sintering phase) in sintering conditions (temperature and atmosphere). Since these powders directly act as the trapping material of trapping the fission product when used as the nuclear fuel in the future, in order to verify whether these powders may directly react with Cs and I, first, chemical forms of these powders need to be defined and sintered phases need to be predicted. In addition, since the sintered phase is determined by the type and composition of the starting material of the trapping material, the sintered phase needs to be thermodynamically predicted before an experiment. Through the result of FIG. 3, as an example, how much any form of compound by adding trapping material oxides at a ratio of 1:1:1 in a sintering condition (1700°C, 98H₂-2CO₂ atmosphere) of an example may be predetermined. The main phases obtained herein are set as a reactant, and hereinafter, reactivity with Cs and I was experimentally checked below and the result was illustrated (see FIG. 5 and FIGS. 6A to 6D).

### Experimental Example 1. Confirmation of trapping performance for Cs and I

In order to verify spontaneous trapping performance for Cs and I reaction specimens using the trapping material prepared by weighing Al₂O₃, SiO₂ and BaO powders prepared above at the weight ratio of 1:1:1, the potentials of a Cs trapping product and an I trapping product formed from the equilibrium phases were calculated and the result thereof was illustrated in FIGS. 4A and 4B (FIG. 4A: Cs trapping product, FIG. 4B: I trapping product). In order to simulate an environment in a nuclear reactor, an O₂ potential is applied as - 450 kJ/mol and a calculation result was illustrated. When a potential change (ΔG) value of each trapping reaction is negative (-), it is determined that the trapping reaction is spontaneous and it can be seen that as the temperature range is increased, an operation range of the trapping material is increased.

According to the results of FIGS. 4A and 4B, Cs is trapped by an Al-Si-O phase to form a trapping product with excellent high-temperature stability, Cs-Al-Si-O (CsAlSiO₄ or CsAlSi₂O₆) or Cs-Si-O (Cs₂O*SiO₂). In a high-temperature area of 900 to 1000°C or higher, some trapping reactions have changed unspontaneously, but some trapping reactions may be still expected as spontaneous trapping reactions to reach 1200°C. In addition, since the high temperature stability is excellent in CsAlSiO₄ or CsAlSi₂O₆, it was confirmed that Cs trapping may be realized in the nuclear fuel (about 1200°C or lower) of a nuclear reactor which is a normal environment. Meanwhile, from FIGS. 4A and 4B, it can be seen that a reaction of trapping I in the form of BaI₂ by sintered phases formed by Ba-O until 1200°C is spontaneous. In addition, in addition to the Cs and I compounds, since BaO, Al₂O₃, SiO₂, or the like is formed as a product, when a trapping material is formed by a reaction therebetween, a reaction cycle may be formed by acting as the trapping material again.

### Experimental Example 2. Confirmation of trapping performance for Cs and I - XRD, SEM/EDS

In order to verify trapping performance for Cs and I reaction specimens using the trapping material prepared by weighing Al₂O₃, SiO₂ and BaO powders prepared above at the weight ratio of 1:1:1, as an example, a reaction heat-treatment experiment was performed at a reducing atmosphere at 650°C.

After reacting gas-phase Cs and I with the compound of the Ba-A1-Si-O composition through heat treatment, respectively, as a result analyzed by XRD and SEM/EDS, it was confirmed that in the Cs reaction specimen, CsAlSiO₄ and CsAlSi₂O₆ were observed (FIG. 5), and in the I reaction specimen, I was detected (FIGS. 6B, 6C, and 6D) and the trapping reaction of Cs and I occurred. Through the presence of CsAlSiO₄ and CsAlSi₂O₆ phases clearly distinguished with diffraction peaks on the XRD, it is verified that the trapping reaction between the trapping material of the Ba-A1-Si-O composition and the gas-phase Cs occurred. Meanwhile, as the SEM/EDS result in which I is detected, it is shown that I is present in a compound form which may be stable at a reaction heat treatment temperature of 650°C. In EDS mapping, it could be interpreted that since a distribution space of an element I tends to be matched with a spatial distribution of a lot of Ba, but is clearly different from an element distribution of a large amount of Al and Si, BaI₂ is formed through the trapping reaction.

## Claims

1. A nuclear fuel pellet comprising:
a nuclear fuel; and
a trapping material of fission gas,
wherein the trapping material of the fission gas comprises an oxide represented by the following Formula 2 : [Formula 2]
BaₗAlₘSiₙOₚ
in which, 0 < 1 ≤ 2, 0 < m ≤ 2, 0 < n ≤ 3 and 0 < p ≤ 8, and 2l + 3m + 4n = 2p, and
the trapping material of the fission gas is included in a grain boundary of the nuclear fuel pellet.

2. The nuclear fuel pellet of claim 1, wherein the nuclear fuel is a uranium-based oxide.

3. The nuclear fuel pellet of claim 1, wherein the trapping material of the fission gas is included in an amount of 0.05 to 1 wt% based on the total weight of the nuclear fuel.

4. The nuclear fuel pellet of claim 1, wherein the fission gas includes at least one selected from the group consisting of cesium (Cs) and iodine (I).

5. The nuclear fuel pellet of claim 1, wherein the trapping material has an average particle size, D₅₀, of 0.1 to 100 µm.

6. A method for trapping fission gas using the nuclear fuel pellet according to any one of claims 1 to 5.

7. The method for trapping the fission gas of claim 6, wherein the fission gas includes at least one selected from the group consisting of cesium (Cs) and iodine (I) .

8. A manufacturing method of a nuclear fuel pellet comprising:
mixing and then sintering a nuclear fuel raw material; and at least one oxide represented by the following Formula 2 :
[Formula 2] BaₗAlₘSiₙOₚ
in which, 0 < 1 ≤ 2, 0 < m ≤ 2, 0 < n ≤ 3 and 0 < p ≤ 8, and 2l + 3m + 4n = 2p.
wherein the nuclear fuel pellet includes a trapping material of fission gas, the trapping material of the fission gas being included in a grain boundary of the nuclear fuel pellet.

9. The manufacturing method of the nuclear fuel pellet of claim 8, wherein the sintering is performed at a temperature which is higher than an eutectic temperature of the nuclear fuel raw material and the oxide and lower than a melting temperature of each of the nuclear fuel and the oxide.

## Patentansprüche

1. Kernbrennstoffpellet, umfassend:
einen Kernbrennstoff; und
ein Einfangmaterial für Spaltgas,
wobei das Einfangmaterial des Spaltgases ein Oxid umfasst, das durch die folgende Formel 2 dargestellt ist:
BaₗAlₘSiₙOₚ [Formel 2]
wobei 0 < l ≤ 2, 0 < m ≤ 2, 0 < n ≤ 3 und 0 < p ≤ 8, und 2l + 3m + 4n = 2p, und
das Einfangmaterial des Spaltgases in einer Korngrenze des Kernbrennstoffpellets enthalten ist.

2. Kernbrennstoffpellet nach Anspruch 1, wobei der Kernbrennstoff ein Oxid auf Uranbasis ist.

3. Kernbrennstoffpellet nach Anspruch 1, wobei das Einfangmaterial des Spaltgases in einer Menge von 0,05 bis 1 Gew.-%, bezogen auf das Gesamtgewicht des Kernbrennstoffs, enthalten ist.

4. Kernbrennstoffpellet nach Anspruch 1, wobei das Spaltgas mindestens eines umfasst, das ausgewählt ist aus der Gruppe, die besteht aus Caesium (Cs) und Iod (I).

5. Kernbrennstoffpellet nach Anspruch 1, wobei das Einfangmaterial eine mittlere Partikelgröße, D₅₀, von 0,1 bis 100 µm aufweist.

6. Verfahren zum Einfangen von Spaltgas unter Verwendung des Kernbrennstoffpellets nach einem der Ansprüche 1 bis 5.

7. Verfahren zum Einfangen des Spaltgases nach Anspruch 6, wobei das Spaltgas mindestens eines umfasst, das ausgewählt ist aus der Gruppe, die besteht aus Caesium (Cs) und Iod (I).

8. Verfahren zur Herstellung eines Kernbrennstoffpellets, umfassend:
Mischen und dann Sintern eines Kernbrennstoff-Rohstoffs; und mindestens eines Oxids, das durch die folgende Formel 2 dargestellt ist:
BaₗAlₘSiₙOₚ [Formel 2]
wobei 0 < l ≤ 2, 0 < m ≤ 2, 0 < n ≤ 3 und 0 < p ≤ 8, und 2l + 3m + 4n = 2p, und
wobei das Kernbrennstoffpellet ein Einfangmaterial für Spaltgas umfasst, wobei das Einfangmaterial des Spaltgases in einer Korngrenze des Kernbrennstoffpellets enthalten ist.

9. Verfahren zur Herstellung des Kernbrennstoffpellets nach Anspruch 8, wobei das Sintern bei einer Temperatur durchgeführt wird, die höher als eine eutektische Temperatur des Kernbrennstoff-Rohstoffs und des Oxids und niedriger als eine Schmelztemperatur von jedem von dem Kernbrennstoff und dem Oxid ist.

## Revendications

1. Pastille de combustible nucléaire comprenant :
un combustible nucléaire ; et
un matériau de piégeage de gaz de fission,
dans laquelle le matériau de piégeage de gaz de fission comprend un oxyde représenté par la formule (2) suivante :
BaₗAlₘSiₙOₚ [formule 2]
dans laquelle 0 < 1 ≤ 2, 0 < m < 2, 0 < n < 3 et 0 < p ≤ 8, et 2l + 3m + 4n = 2p, et
le matériau de piégeage du gaz de fission est inclus dans un joint de grains de la pastille de combustible nucléaire.

2. Pastille de combustible nucléaire selon la revendication 1, dans laquelle le combustible nucléaire est un oxyde à base d'uranium.

3. Pastille de combustible nucléaire selon la revendication 1, dans laquelle le matériau de piégeage de gaz de fission est inclus en une quantité de 0,05 à 1 % en poids par rapport au poids total du combustible nucléaire.

4. Pastille de combustible nucléaire selon la revendication 1, dans laquelle le gaz de fission comprend au moins l'un choisi dans le groupe constitué par le césium (Cs) et l'iode (I).

5. Pastille de combustible nucléaire selon la revendication 1, dans laquelle le matériau de piégeage a une granulométrie moyenne D₅₀ de 0,1 à 100 µm.

6. Procédé de piégeage d'un gaz de fission utilisant la pastille de combustible nucléaire selon l'une quelconque des revendications 1 à 5.

7. Procédé de piégeage d'un gaz de fission selon la revendication 6, dans lequel le gaz de fission comprend au moins l'un choisi dans le groupe constitué par le césium (Cs) et l'iode (I).

8. Procédé de fabrication d'une pastille de combustible nucléaire, comprenant :
le mélange et ensuite le frittage d'une matière première de combustible nucléaire ; et d'au moins un oxyde représenté par la formule (2) suivante :
BaₗAlₘSiₙOₚ [formule 2]
dans laquelle 0 < 1 ≤ 2, 0 < m < 2, 0 < n < 3 et 0 < p ≤ 8, et 2l + 3m + 4n = 2p,
dans lequel la pastille de combustible nucléaire comprend un matériau de piégeage de gaz de fission, le matériau de piégeage de gaz de fission étant inclus dans un joint de grains de la pastille de combustible nucléaire.

9. Procédé de fabrication d'une pastille de combustible nucléaire selon la revendication 8, dans lequel le frittage est effectué à une température qui est supérieure à la température eutectique de la matière première de combustible nucléaire et de l'oxyde et inférieure au point de fusion de chacun parmi le combustible nucléaire et l'oxyde.
